# EUROPÄISCHE PATENTSCHRIFT

(11) **EP 0 305 723 B1**
(45) Veröffentlichungstag und Bekanntmachung des Hinweises auf die Patenterteilung: **26.05.1993**
(21) Anmeldenummer: 88111893.9
(22) Anmeldetag: 23.07.1988
(51) Int. Cl.: H02G 3/22, F16L 5/02

(54) **Mauerdurchführung für Kabel, Leitungen, Rohre oder dgl**
Wall feed-through for cables, conduits, tubes or the like
Traversée de mur pour câbles, conduites, tuyaux ou similaires

(30) Priorität: 04.09.1987 DE 3729665
(43) Veröffentlichungstag der Anmeldung: 08.03.1989
(73) Patentinhaber: Walter Rose GmbH & Co. KG, D-58099 Hagen (DE)
(72) Erfinder: Fremgen, Dieter, Dipl.-Ing., D-5603 Wülfrath (DE); Vernaleken, Alban, D-4930 Detmold (DE)
(74) Vertreter: Patentanwälte Meinke, Dabringhaus und Partner

(56) Entgegenhaltungen:
- WO-A-86/02136
- FR-A- 2 287 013
- GB-A- 1 181 651
- US-A- 3 125 358

## Beschreibung

Die Erfindung betrifft eine Mauerdurchführung für Kabel, Leitungen, Rohre oder dgl. mit einem in einen Mauerdurchbruch einsetzbaren Rohr und mit einer außen auf dem Rohr angeordneten Mauerabschlußplatte in Form eines Flansches sowie mit einer in Längsrichtung der Durchführung verpressbaren Dichtmasse zur Abdichtung der Mauerdurchführung gegenüber dem Mauerdurchbruch, wobei das Rohr als Teleskoprohr mit einem äußeren und einem inneren Rohr ausgebildet ist und wobei zwischen der Mauerabschlußplatte und der Außenseite des Mauerdurchbruches die verpressbare Dichtmasse angeordnet ist.

Derartige Mauerdurchführungen dienen dazu, eine Gas- und Feuchtigkeitsabdichtung zwischen Kabeln, Leitungen, Rohren usw. und der Außenmauer eines Gebäudes in einem nachträglich in die Mauer eingebrachten Mauerdurchbruch zu bilden, durch den die Kabel, Leitungen und Rohre von außen in das Innere des Gebäudes hindurchgeführt werden. Dabei ist eine Abdichtung nicht nur zwischen den Kabeln, Leitungen und Rohren gegen das die Mauerdurchführung im wesentlichen bildende Rohr, sondern auch eine Abdichtung zwischen dem Rohr und der Gebäudemauer erforderlich.

Eine derartige Mauerdurchführung ist aus WO 86/02136 bekannt. Diese Mauerdurchführung weist ein als Teleskoprohr ausgebildetes Mantelrohr auf, welches in Anpassung an die jeweilige Mauerdurchbruchslänge unterschiedlich lang eingestellt werden kann, d.h. vor dem Einführen der Mauerdurchführung in den Mauerdurchbruch wird vom Bedienungspersonal eine entsprechende Rohrlänge eingestellt und die beiden Teleskoprohre werden dann mittels eines Befestigungsflansches zueinander festgelegt. Die Abdichtung der Mauerdurchführung soll innerhalb des Mantelrohres mittels eines innenliegenden Elastikteiles erfolgen, während die Abdichtung gegenüber der Maueraußenseite mittels eines mit Dichtmasse versehenen Flansches erfolgt, wobei dieser Flansch an die Maueraußenseite vorzugsweise angeklebt werden soll. Eine einwandfreie Abdichtung erfolgt deshalb nur, wenn die Mauerdurchführung vom Bedienungspersonal einwandfrei montiert wird, was im Einsatzfall jedoch nicht immer zuverlässig gewährleistet ist.

Eine andere Ausführungsform einer Mauerdurchführung ist aus der DE 29 01 266 A1 bekannt. Dabei ist das Rohr mit zwei Flanschen ausgerüstet, zwischen denen am Umfang des Rohres eine Dichtungsmasse vorgesehen ist, wobei ein Flansch als zum Verpressen der Dichtungsmasse innerhalb des Mauerdurchbruches zumindest über einen Teil der Durchbruchlänge verschiebbarer Ringkolben fest am Rohr ausgebildet ist und ein auf dem Rohr längsverschiebbarer Flansch unverdrehbar am Rohr geführt ist. Die Mauerdurchführung wird von außen in den Mauerdurchbruch eingesetzt, so daß sich die Dichtungsmasse im Ringraum zwischen der Mauerdurchführung und dem Mauerdurchbruch befindet. Durch Anziehen einer Spannmutter am längsverschiebbaren Flansch wird der als Ringkolben ausgebildete Flansch in die Mauerdurchführung hineingezogen, so daß sich die Dichtungsmasse verpreßt. Der Verpressungsgrad der Dichtungsmasse und damit die Dichtwirkung der Mauerdurchführung hängt von der auf die Spannmutter aufgebrachten Kraft ab. Damit ist die Dichtigkeit dieser Mauerdurchführung vom Montagepersonal abhängig, d.h. es ist nicht immer gewährleistet, daß die Mauerdurchführung ausreichend sorgfältig abgedichtet ist. Eine vergleichbare Lösung ist aus US-A-3 125 358 bekannt.

Aufgabe der Erfindung ist deshalb die Schaffung einer Mauerdurchführung, welche völlig unabhängig von der Art der Montage und der Zuverlässigkeit des Montagepersonals eine gleichbleibend gute Dichtigkeit zwischen Mauerdurchbruch und Mauerdurchführung aufweist.

Diese Aufgabe wird mit einer Mauerdurchführung der eingangs bezeichneten Art erfindungsgemäß dadurch gelöst, daß das innere und das äußere Rohr über eine Druckfeder beaufschlagt sind, wobei am freien Ende des inneren Rohres ausklappbare Greifmittel zur Abstützung an der Innenseite des Mauerdurchbruches vorgesehen sind.

Die Mauerdurchführung wird von der Außenseite in den Mauerdurchbruch eingeschoben und entsprechend der Mauerstärke wird das innere Rohr des Teleskoprohres soweit ausgezogen bis die Greifmittel auf der Mauerinnenseite anliegen. Durch die Druckfeder zwischen dem inneren und äußeren Rohr des Teleskoprohres werden beide Rohre verspannt, so daß die Mauerabschlußplatte mit der Dichtmasse absolut dicht an der Maueraußenseite anliegt. Der Anpreßdruck der Mauerabschlußplatte und damit der Dichtmasse hängt demnach nur von der Spannung der Druckfeder ab und ist völlig unabhängig vom Montagepersonal. Je nach Mauerstärke des Mauerdurchbruches kann man unterschiedliche Mauerdurchführungen vorsehen.

Weiterhin sieht die Erfindung vor, daß am inneren Ende des äußeren Rohres eine Schulter für eine Lippendichtung und die Druckfeder und am äußeren Ende des inneren Rohres eine Aufkantung für die Druckfeder vorgesehen sind. Die Lippendichtung dient dabei zur Abdichtung der beiden Teleskoprohre gegen den Mauerdurchbruch.

Ferner sieht die Erfindung vor, daß die Greifmittel als Spreizhaken ausgebildet sind, deren Enden im Montagezustand zwischen dem Ende des äußeren Rohres und dem inneren Rohr am inneren Rohr anliegend eingeklemmt sind. Das Teleskoprohr kann somit zunächst ohne Schwierigkeiten in die Mauerdurchführung eingeführt werden und anschließern können die Spreizhaken ausgeklappt und an der Mauerinnenfläche befestigt werden.

Außerdem ist vorgesehen, daß am freien Ende des inneren Rohres eine abnehmbare Montagekappe mit Drucklippen zur Anlage an den Spreizhaken vorgesehen ist, wobei die Drucklippen über etwa rechtwinklige Abbiegungen der Spreizhaken im Sinne einer Aufspreizung auf diese wirken. Vor der Montage wird die Montagekappe mit den Drucklippen auf das freie Ende des inneren Rohres aufgesetzt, so daß die Drucklippen an dem am inneren Rohr anliegenden mit den Spitzen zwischen dem inneren und äußeren Rohr eingeklemmten Spreizhaken anliegen. Nach Einführung der Mauerdurchführung in den Mauerdurchbruch wird mit Hilfe eines in das Rohr eingeführten Stempels die Montagekappe in das Innere der Mauerdurchführung eingedrückt, so daß gleichzeitig das innere Teleskoprohr ausgefahren wird und die Spreizhaken aus der Verankerung gelöst werden. Sobald das innere Rohr ausreichend weit aus der Mauerdurchführung herausragt, werden die Spreizhaken durch die Drucklippen der Montagekappe ausgeklappt und durch Rückführung des Stempels liegen die Spreizhaken an der Innenseite der Mauerdurchführung an, so daß das Rohr eingespannt ist. Diese Ausgestaltung ermöglicht die Montage der Mauerdurchführung durch eine Person von der Maueraußenseite.

Zusätzlich kann vorgesehen sein, daß am Umfang des äußeren Rohres Zentriervorsprünge angeordnet sind.

In weiterer Ausgestaltung sieht die Erfindung vor, daß ein Abschlußdeckel zum Aufsatz auf das freie Ende des inneren Rohres nach der Montage vorgesehen ist. Dieser ringförmige Abschlußdeckel hat keine funktionale Bedeutung, sondern dient nur als Mauerabschluß.

In besonders vorteilhafter Ausgestaltung ist vorgesehen, daß die Montagekappe und der Abschußdeckel mit einem Bajonettverschluß zur Befestigung am freien Ende des inneren Rohres ausgerüstet ist. Diese Ausgestaltung ermöglicht ein besonders einfaches Auf- und Absetzen der Montagekappe bzw. des Abschlußdeckels.

Schließlich ist vorgesehen, daß die Mauerabschlußplatte mit einer Mehrzahl von Anschlußstutzen versehen ist. Dadurch ist die Mauerdurchführung auch für eine Mehrzahl von Kabeln, Leitungen oder dgl. geeignet. Nicht benötigte Anschlußstutzen können dabei mit Hilfe von Schrumpfkappen oder mechanischen Dichtungen verschlossen werden.

Die Erfindung ist nachstehend anhand der Zeichnung beispielsweise näher erläutert. Diese zeigt in
- Fig. 1: in einem Längsschnitt ein Ausführungsbeispiel,
- Fig. 2: dasselbe Ausführungsbeispiel wie in Fig. 1 im Zustand vor der Montage,
- Fig. 3: ein Detail aus Fig. 2 vor der Montage,
- Fig. 4: dasselbe Detail wie in Fig. 3 nach der Montage und in
- Fig. 5: einem Schnitt gemäß der Linie V-V in Fig. 4.

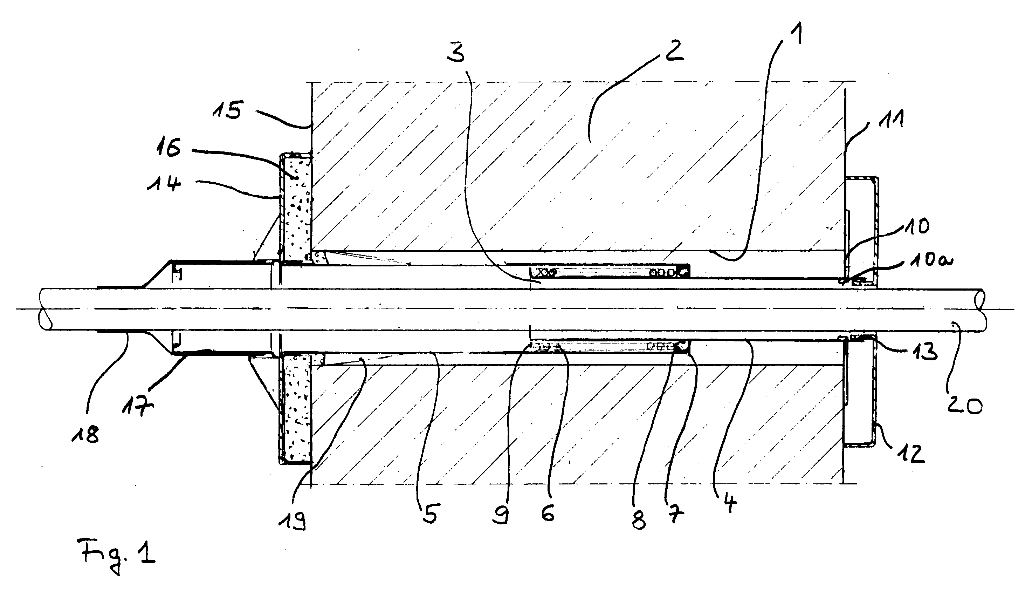

Wie in Fig. 1 dargestellt, ist in ein Mauerdurchbruch 1 einer Mauer 2 eine Mauerdurchführung 3 eingesetzt. Die Mauerdurchführung 3 weist ein inneres Teleskoprohr 4 und ein äußeres Teleskoprohr 5 auf, die über eine Druckfeder 6 ineinander verschiebbar verbunden sind. Am Ende des äußeren Rohres 5 befindet sich eine Schulter 7 für eine Lippendichtung 8 und zur Abstützung der Druckfeder 6. Zur Abstützung der Druckfeder 6 auf der Gegenseite ist am Ende des inneren Rohres 4 eine Aufkantung 9 vorgesehen. Am freien Ende des inneren Rohres 4 sind Spreizhaken 10, die an einer Innenwand 11 der Mauer 2 anliegen, angeordnet. Die Spreizhaken 10 greifer über etwa rechtwinklige Abbiegungen 10a in das innere Rohr 4 ein. Außerdem ist ein Abschlußdeckel 12 über einen Basonettverschluß 13 auf das freie Ende des inneren Rohres 4 gesetzt. Das äußere Teleskoprohr 5 weist außerhalb des Mauerdurchbruches 1 am Umfang eine feste Mauerabschlußplatte 14 auf, die zur Maueraußenseite 15 hin mit einer Dichtmasse 16 beschichtet ist. Über die Mauerabschlußplatte 14 hinaus ragt ein Rohrstutzen 17 des äußeren Rohres 5, auf den ein Schrumpfschlauch 18 aufgebracht ist. Zur Zentrierung des äußeren Rohres 5 sind am Umfang des äußeren Rohres 5 Zentriervorsprünge 19 angeordnet. Durch die Mauerdurchführung 3 ist ein Kabel 20 geführt.

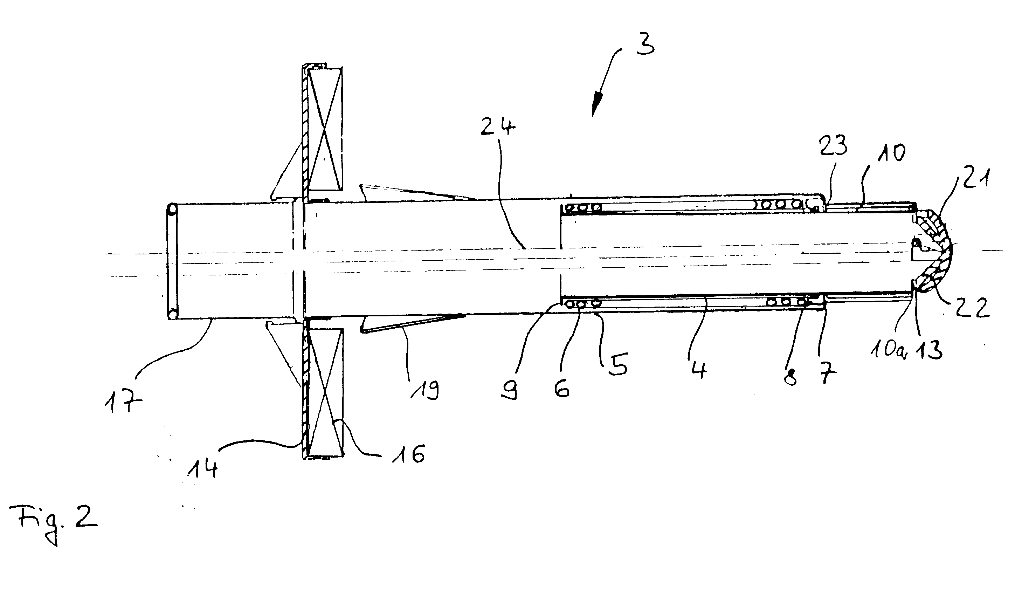

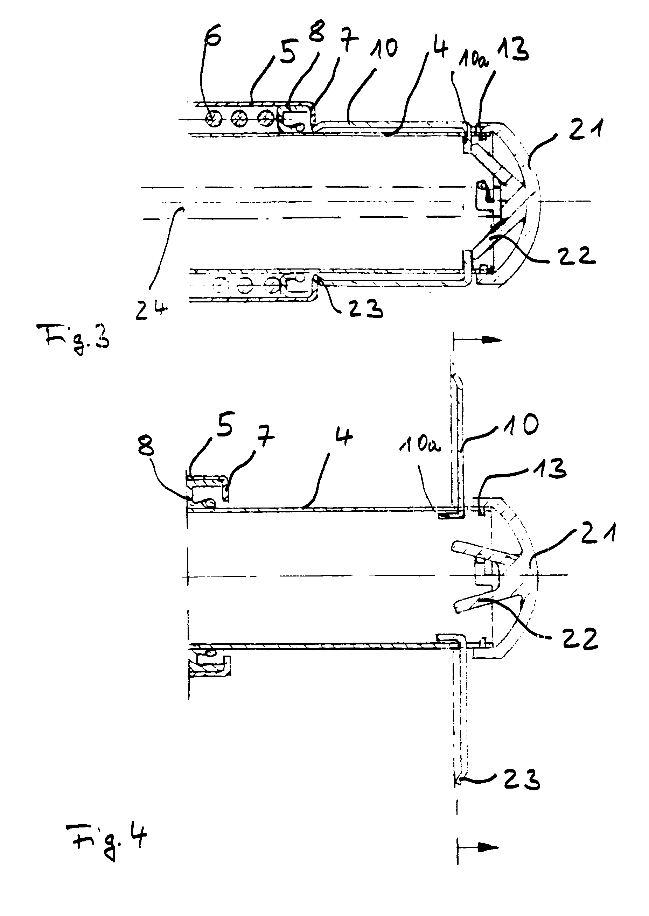

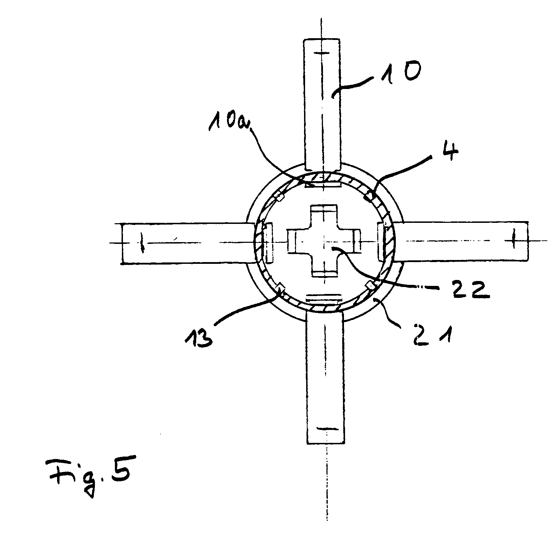

Die Mauerdurchführung 3 wird folgendermaßen montiert:
Wie aus Fig. 2 ersichtlich, ist im Montagezustand am freien Ende des inneren Rohres 4 anstelle des Abschlußdeckels 12 eine Montagekappe 21 über den Bajonettverschluß 13 befestigt. Die Montagekappe 21 weist Drucklippen 22 auf, die unter Druckeinwirkung an den Abbiegungen 10a der Spreizhaken 10 anliegen, wobei die Spreizhaken im Montagezustand mit ihren Spitzen 23 zwischen dem äußeren Teleskoprohr 5 und dem inneren Teleskoprohr 4 eingeklemmt sind, so daß sie am inneren Rohr 4 anliegen.

Von der Innenwand 11 aus wird die Mauer 2 durchbohrt, so daß der Mauerdurchbruch 1 entsteht. Von der Maueraußenseite 15 aus wird nun von einem einzigen Monteur die Mauerdurchführung 3 in den Mauerdurchbruch 1 eingeführt, bis die Dichtmasse 16 an der Maueraußenseite 15 anliegt. Anschließend wird ein Stempel 24 in das Teleskoprohr 4,5 eingeführt. Dabei wird der Stempel 24 gegen die Montagekappe 21 gedrückt, so daß das innere Rohr 4 aus dem äußeren Rohr 5 herausgleitet. Dabei rutschen die Spitzen 23 der Spreizhaken 10 aus der Verankerung zwischen dem äußeren Rohr 5 und dem inneren Rohr 4 heraus. Sobald das innere Rohr 4 den Mauerdurchbruch 1 auf der Innenwand 11 durchbricht, werden die Spreizhaken 10 durch die an den Abbiegungen 10a anliegenden Drucklippen 22 der Montagekappe 21 radial nach außen geschwenkt. Wird nun der Stempel 24 wieder herausgezogen, so wird das innere Rohr 4 durch die Kraft der Druckfeder 6 in das äußere Rohr 5 zurückgezogen, bis die Spreizhaken 10 an der Innenwand 11 der Mauer 2 anliegen. Dadurch werden die beiden Rohre 4 und 5 gegeneinander verspannt und die Dichtmasse 16 wird zwischen der Maueraußenseite 15 und der Mauerabschlußplatte 14 verpreßt. Es entsteht somit ein dichter Abschluß zwischen dem Mauerdurchbruch 1 und der Mauerdurchführung 3. Der Anpressdruck auf die Dichtmasse 16 hängt dabei nur von der Druckfeder 6 ab und ist völlig unabhängig vom Montagepersonal. Je nach Wandstärke des Mauerdurchbruchs 1 sind unterschiedliche Druckfedergrößen und Rohrlängen vorgesehen.

Nach der Montage wird die Montagekappe 21 über den Bajonettverschluß 13 vom inneren Rohr abgenommen und das Kabel 20 kann durch die Mauerdurchfuhrung 3 hindurchgeführt werden. Zur Abdichtung des Kabels (20) an der Maueraußenseite 15 wird dabei der Schrumpfschlauch 18 auf den Rohrstutzen 17 aufgeschrumpft. Auf der Innenseite kann anschließend, wie in Fig. 1 dargestellt, der ringförmige Abschlußdeckel 12 mit Hilfe des Bajonettverschlusses 13 am Ende des inneren Rohres 4 befestigt werden.

Zur Durchführung mehrerer Kabel 20 kann die Mauerabschlußplatte 14 mit mehreren Rohrstutzen 17 und der Abschlußdeckel 12 entsprechend mit mehreren Öffnungen ausgestattet sein. Nicht benötigte Stutzen 17 können mit Hilfe von Schrumpfkappen oder mechanischen Dichtungen verschlossen werden.

## Patentansprüche

1. Mauerdurchführung für Kabel, Leitungen, Rohre oder dgl. mit einem in einen Mauerdurchbruch (1) einsetzbaren Rohr und mit einer außen auf dem Rohr angeordneten Mauerabschlußplatte (14) in Form eines Flansches sowie mit einer in Längsrichtung der Durchführung verpressbaren Dichtmasse zur Abdichtung der Mauerdurchführung gegenüber dem Mauerdurchbruch, wobei das Rohr als Teleskoprohr mit einem äußeren (5) und einem inneren Rohr (4) ausgebildet ist und wobei zwischen der Mauerabschlußplatte (14) und der Außenseite (15) des Mauerdurchbruches (1) die verpressbare Dichtmasse (16) angeordnet ist,
dadurch gekennzeichnet,
daß das innere (4) und das äußere (5) Rohr über eine Druckfeder (6) beaufschlagt sind, wobei am freien Ende des inneren Rohres (4) ausklappbare Greifmittel (10) zur Abstützung an der Innenseite (11) des Mauerdurchbruches (1) vorgesehen sind.

2. Mauerdurchführung nach Anspruch 1,
dadurch gekennzeichnet,
daß am inneren Ende des äußeren Rohres (5) eine Schulter (7) für eine Lippendichtung (8) und die Druckfeder (6) und am äußeren Ende des inneren Rohres (4) eine Aufkantung (9) für die Druckfeder (6) vorgesehen sind.

3. Mauerdurchführung nach Anspruch 1 oder 2,
dadurch gekennzeichnet,
daß die Greifmittel als Spreizhaken (10) ausgebildet sind, deren Enden (23) im Montagezustand zwischen dem inneren Ende des äußeren Rohres (5) und dem inneren Rohr (4) am inneren Rohr (4) anliegend eingeklemmt sind.

4. Mauerdurchführung nach Anspruch 1 oder einem der folgenden,
dadurch gekennzeichnet,
daß am freien Ende des inneren Rohres (4) eine abnehmbare Montagekappe (21) mit Drucklippen (22) zur Anlage an den Spreizhaken (10) vorgesehen ist, wobei die Drucklippen (22) über etwa rechtwinklige Abbiegungen (10a) der Spreizhaken (10) im Sinne einer Aufspreizung auf diese wirken.

5. Mauerdurchführung nach Anspruch 1 oder einem der folgenden,
dadurch gekennzeichnet,
daß am Umfang des äußeren Rohres (5) Zentriervorsprünge (19) angeordnet sind.

6. Mauerdurchführung nach Anspruch 1 oder einem der folgenden,
dadurch gekennzeichnet,
daß ein Abschlußdeckel (12) zum Aufsatz auf das freie Ende des inneren Rohres (4) nach der Montage vorgesehen ist.

7. Mauerdurchführung nach Anspruch 1 oder einem der folgenden,
dadurch gekennzeichnet,
daß die Montagekappe (21) und der Abschlußdeckel (12) mit einem Bajonettverschluß (13) zur Befestigung am freien Ende des inneren Rohres (4) ausgerüstet sind.

8. Mauerdurchführung nach Anspruch 1 oder einem der folgenden,
dadurch gekennzeichnet,
daß die Mauerabschlußplatte (14) mit einer Mehrzahl von Anschlußstutzen (17) versehen ist.

## Claims

1. A wall ducting arrangement for cables, conduits, pipes or the like, comprising a tube which can be fitted into an opening (1) through a wall and a wall closure plate (14) in the form of a flange which is arranged eternally on the tube and a sealing material which can be pressed in the longitudinal direction of the ducting arrangement for sealing off the wall ducting arrangement relative to the wail opening, wherein the tube is in the form of a telescopic tube with an outer tube (5) and an inner tube (4), and wherein the pressable sealing material (16) is arranged between the wall closure plate (14) and the outward side (15) of the wall opening (1), characterised in that the inner tube (4) and the outer tube (5) are acted upon by way of a compression spring (6), wherein provided at the free end of the inner tube (4) are gripping bans (10) which can be pivoted outwardly for bearing against the inward side (11) of the wall opening (1).

2. A wall ducting arrangement according to claim 1 characterised in that a shoulder (7) for a lip seal (8) and the compression spring (6) is provided at the inner end of the outer tube (5) and an on-edge portion (9) is provided for the compression spring (6) at the outer end of the inner tube (4).

3. A wall ducting arrangement according to claim 1 or claim 2 characterised in that the gripping bans are in the form of spreading hooks (10) whose ends (23) in the assembly condition are clapped in a condition of bearing against the inner tube (4) between the inner end of the outer tube (5) and the inner tube (4).

4. A wall ducting arrangement according to claim 1 or one of the following claims characterised in that a removable assembly cap (21) with pressure lips (22) for bearing against the spreading hooks (10) is provided at the free end of the inner tube (4), wherein the pressure lips (22) act on the Spreading hooks (10) in the direction of spreading the open by way of substantially right-angled bent portions (10a) of the spreading hooks (10).

5. A wall ducting arrangement according to claim 1 or one of the following claims characterised in that centering projections (19) are arranged at the periphery of the outer tube (5).

6. A wall ducting arrangement according to claim 1 or one of the following claims characterised in that a closure cover (12) is provided for fitting on to the free end of the inner tube (4) after the assembly operation.

7. A wall ducting arrangement according to claim 1 or one of the following claims characterised in that the assembly cap (21) and the closure cover (12) are provided with a bayonet connection (13) for fixing to the free end of the inner tube (4).

8. A wall ducting arrangement according to claim 1 or one of the following claims characterised in that the wall closure plate (14) is provided with a plurality of connecting portions (17).

## Revendications

1. Traversée de mur pour câbles, conduites, tubes ou tuyaux ou similaires au moyen d'un tube ou tuyau pouvant être placé dans une percée de mur (1) avec une plaque d'obturation de mur (14) montée extérieurement sur le tuyau sous forme d'une bride ainsi qu'une masse ou pâte d'étanchéité comprimable dans le sens longitudinal de la traversée pour rendre étanche la traversée de mur par rapport à la percée du mur, le tube étant réalisé sous forme de tube télescopique avec un tube extérieur (5) et un tube intérieur (4) et entre la plaque d'obturation de mur (14) et le côté extérieur (15) de la percée de mur (1) on place la masse ou pâte d'étanchéité comprimable (16),
caractérisée en ce que
le tube intérieur (4) et le tube extérieur (5) sont sollicités par un ressort de compression (6), sur l'extrémité libre du tube intérieur (4), des moyens de préhension rabattables (10) étant prévus pour le soutènement de la percée de mur (1) sur son côté interne (11).

2. Traversée de mur selon la revendication 1,
caractérisée en ce que
sur l'extrémité interne du tube extérieur (5) est prévu un épaulement (7) pour une étanchéité à lèvre (8) et le ressort de compression (6) et sur l'extrémité extérieure du tube intérieur (4) est prévue une saillie (9) pour le ressort de compression (6).

3. Traversée de mur selon la revendication 1 ou 2,
caractérisée en ce que
les moyens de préhension sont réalisés sous forme de crochets d'écartement (10) dont les extrémités (23) à l'état monté sont encastrées entre l'extrémité interne du tube extérieur (5) et le tube intérieur (4) sur le tube intérieur (4).

4. Traversée de mur selon la revendication 1 ou l'une des revendications suivantes,
caractérisée en ce que
sur l'extrémité libre du tube intérieur (4) il est prévu un capuchon de montage amovible (21) avec des lèvres de compression (22) venant en appui sur les crochets d'écartement (10), les lèvres de compression (22) agissant sur des parties repliées sensiblement à angle droit (10a) des crochets d'écartement (10) dans le sens d'un écartement de ceux-ci.

5. Traversée de mur selon la revendication 1 ou l'une des revendications suivantes,
caractérisée en ce que
des saillies de centrage (19) sont agencées sur la périphérie du tube extérieur (5).

6. Traversée de mur selon la revendication 1 ou l'une des revendications suivantes,
caractérisée en ce qu'il est prévu
un couvercle d'obturation (12) destiné à être mis en place sur l'extrémité libre du tube intérieur (4) après le montage.

7. Traversée de mur selon la revendication 1 ou l'une des revendications suivantes,
caractérisée en ce que
le capuchon de montage (21) et le couvercle d'obturation (12) sont munis d'un système de fermeture à baïonnette (13) pour la fixation sur l'extrémité libre du tube intérieur (4).

8. Traversée de mur selon la revendication 1 ou l'une des revendications suivantes,
caractérisée en ce que
la plaque d'obturation de mur (14) est munie d'une pluralité de tubulures de raccordement (17).
